# EUROPEAN PATENT SPECIFICATION

(11) **EP 3 018 173 B1**
(45) Date of publication and mention of the grant of the patent: **31.07.2019**
(21) Application number: 14820144.5
(22) Date of filing: 02.06.2014
(51) Int. Cl.: C08L 67/04, C08K 5/053, C08L 33/00

(54) **POLYESTER RESIN COMPOSITION AND MOLDED ARTICLE COMPRISING SAID RESIN COMPOSITION**
POLYESTERHARZZUSAMMENSETZUNG UND FORMTEIL UMFASSEND DIESE HARZZUSAMMENSETZUNG
COMPOSITION DE RÉSINE POLYESTER ET ARTICLE MOULÉ COMPRENANT LADITE COMPOSITION DE RÉSINE

(30) Priority: 03.07.2013 JP 2013140026
(43) Date of publication of application: 11.05.2016
(73) Proprietor: Kaneka Corporation, Osaka-shi, Osaka 530-8288 (JP)
(72) Inventor: SUZUKI, Noriyuki, Osaka 566-0072 (JP); MINAMI, Tetsuya, Osaka 566-0072 (JP)
(74) Representative: Vossius & Partner Patentanwälte Rechtsanwälte mbB
(86) International application number: PCT/JP2014/002905
(87) International publication number: WO 2015/001706

(56) References cited:
- WO-A1-2006/121011
- WO-A1-2006/121147
- WO-A1-2008/099586
- JP-A- 2005 042 104
- JP-A- 2005 060 689
- JP-A- 2005 232 230
- JP-A- 2006 137 853

## Description

### Technical Field

The present invention relates to a polyester resin composition, and in particular to a polyester resin composition for the purpose that a biodegradable polyester resin, which is degraded by action of microorganisms, is used for various industrial materials, and a molded article made of this composition.

### Background Art

In recent years, the development of biodegradable plastics has been becoming active as materials for solving problems that plastic wastes cause a large burden to be imposed onto the global environment, examples of the problem including an effect onto ecological systems, the generation of harmful gases when the wastes are burned, and global warming based on a large quantity of burning calories thereof.

Carbon dioxide emitted when plant-originating biodegradable plastics out of the biodegradable plastics are burned is originally present in the air. Thus, the plant-originating biodegradable plastics do not cause an increase in carbon dioxide quantity in the atmosphere. This matter is called carbon neutrality. Importance is attached to the matter under the Kyoto Protocol, in which target values are set for carbon dioxide reduction. Thus, an active use of the plant-originating biodegradable plastics has been desired.

Recently, from the viewpoint of biodegradability and carbon neutrality, attention has been paid to aliphatic polyester resins as plastics originating from plants, in particular, to polyhydroxyalkanoate (hereinafter may be referred to as PHA) resins. Furthermore, among the PHA resins, attention is paid to the followings: poly(3-hydroxybutyrate) homopolymer resin, poly(3-hydroxybutyrate-co-3-hydroxyvalerate) copolymer resin, poly(3-hydroxybutyrate-co-3-hydroxyhexanoate) copolymer resin, poly(3-hydroxybutyrate-co-4-hydroxybutyrate) copolymer resin (hereinafter may be referred to as P3HB4HB), polylactic acid, and others.

However, the PHA resins arc slow crystallization speed. Thus, when subjected to mold, the resins need to be cooled for a long cooling time for solidification after heated and melted, so that the resins have problems of being poor in productivity, and being changed with time in mechanical properties (in particular, tensile elongation at break and other toughness) by secondary crystallization caused after the molding.

Accordingly, the following has been hitherto suggested: an inorganic material is blended into a PHA resin to promote the crystallization thereof, examples of the inorganic material including boron nitride, titanium oxide, talc, lamellar silicates, calcium carbonate, sodium chloride, and metal phosphates. However, many inconveniences are caused. For example, the obtained molded article is lowered in tensile elongation, the surface of the molded article is deteriorated in external appearance, and when the molded article is made into a film, the transparency thereof is damaged. Accordingly, the effects are not sufficient.

In light of the above-described inconveniences, the inventors have found out that pentaerythritol is effective as a crystallization nucleating agent for polyhydroxyalkanoates (Patent Literature 1). However, a molded article of a polyhydroxyalkanoate composition containing pentaerythritol may undergo the generation of the so-called blooming, i.e., a phenomenon that pentaerythritol oozes out onto the surface thereof when a long time has elapsed. Thus, the use of the molded article may be restricted in accordance with a case where the use is made (in particular, for example, a case for which the quality stability regarding hygiene, external appearance or some other is required).

Patent Literature 2 relates to a resin composition comprising (A) a biodegradable (3-hydroxyalkanoate) copolymer having a recurring unit represented by the formula [-CHR-CH₂-CO-O-], wherein R represents an alkyl group represented by CₙH₂ₙ₊₁; and n is an integer of 1 to 15, and 0.1 to 100 parts by weight, based on 100 parts by weight of (A) the biodegradable (3-hydroxyalkanoate) copolymer, of (B) an acrylic modifier having an weight average molecular weight Mw of 500,000 to 10,000,000.
Patent Literature 3 relates to a composition comprising an aliphatic polyester-based polymer produced from a microorganism and a crystal nucleating agent comprising sugar alcohols.

### Citation List

### Patent Literature

PTL 1: Japanese Patent Application No: 2012-172812
Patent Literature 2: EP 1 881 035 A1
Patent Literature 3: WO 2008/099586 A1

### Summary of Invention

### Technical Problem

An object of the present invention is to inhibit the blooming of pentaerythritol useful as a crystallization nucleating agent for biodegradable polyesters, which are degraded into water and carbon dioxide by the action of microorganisms, in particular, for polyhydroxyalkanoates.

### Solution to Problem

The inventors have found out that the blooming can be inhibited by adding an acrylic compound to a polyhydroxyalkanoate and pentaerythritol. Thus, the present invention has been achieved.

Accordingly, the present invention relates to a polyester resin composition comprising a polyhydroxyalkanoate (A), an acrylic compound (B), and pentaerythritol (C), wherein the acrylic compound (B) is an acrylic (co)polymer made mainly from one or more acrylic esters or methacrylic esters, and the acrylic compound (B) is contained in an amount of from 0.1 to 100 parts by weight based on 100 parts by weight of the polyhydroxyalkanoate (A).

The acrylic compound (B) is preferably a copolymer made mainly from an acrylic ester and a methacrylic ester.

The acrylic compound (B) is preferably a copolymer made mainly from butyl acrylate and methyl methacrylate.

An amount of the acrylic compound (B) is preferably from 0.1 to 50 parts by weight for 100 parts by weight of the polyhydroxyalkanoate (A).

A content of the pentaerythritol (C) is preferably from 0.05 to 20 parts by weight for 100 parts by weight of a total content of the polyhydroxyalkanoate (A) and the acrylic compound (B).

The polyhydroxyalkanoate (A) preferably contains a repeating unit represented by general formula (1) below:

[-CHR-CH₂-CO-O-] (1)

wherein R represents an alkyl group represented by CₙH₂ₙ₊₁ wherein n is an integer of 1 or more and 15 or less.

The polyhydroxyalkanoate (A) preferably contains one or more selected from poly(3-hydroxybutyrate), poly(3-hydroxybutyrate-co-3-hydroxyvalerate), poly(3-hydroxybutyrate-co-3-hydroxyvalerate-co-3-hydroxyhexanoate), poly(3-hydroxybutyrate-co-3-hydroxyhexanoate), and poly(3-hydroxybutyrate-co-4-hydroxybutyrate).

A second aspect of the present invention relates to a polyester resin molded article comprising the above-described polyester resin composition.

### Advantageous Effects of Invention

In accordance with the present invention, the blooming of pentaerythritol, which is a crystallization nucleating agent for polyhydroxyalkanoates, can be inhibited.

### Description of Embodiments

Hereinafter, the present invention will be described in detail.

The polyester resin composition of the present invention is characterized by comprising a PHA (A), an acrylic compound (B), and pentaerythritol (C), wherein the acrylic compound (B) is an acrylic (co)polymer obtainable mainly from one or more acrylic esters or methacrylic esters, and the acrylic compound (B) is contained in an amount of from 0.1 to 100 parts by weight based on 100 parts by weight of the polyhydroxyalkanoate (A).

In the present invention, the PHA (A) is a polyester resin containing a repeating unit represented by the general formula: [-CHR-CH₂-CO-O-].

The PHA(A) used in the present invention preferably contains a repeating unit represented by the formula (1): [-CHR-CH₂-CO-O-] wherein R represents an alkyl group represented by CₙH₂ₙ₊₁ wherein n is an integer of 1 or more and 15 or less.

The PHA is preferably a polymer resin containing 80% by mole or more of 3-hydroxybutyrate, more preferably a polymer resin containing 85% by mole or more of 3-hydroxybutyrate. Such a polymer resin is preferably a resin produced by microorganisms. Specific examples thereof include poly(3-hydroxybutyrate) homopolymer resin, poly(3-hydroxybutyrate-co-3-hydroxypropionate) copolymer resin, poly(3-hydroxybutyrate-co-3-hydroxyvalerate) copolymer resin, poly(3-hydroxybutyrate-co-3-hydroxyvalerate-co-3-hydroxyhexanoate) copolymer resin, poly(3-hydroxybutyrate-co-3-hydroxyhexanoate) copolymer resin, poly(3-hydroxybutyrate-co-3-hydroxyheptanoate) copolymer resin, poly(3-hydroxybutyrate-co-3-hydroxyoctanoate) copolymer resin, poly(3-hydroxybutyrate-co-3-hydroxynonanoate) copolymer resin, poly(3-hydroxybutyrate-co-3-hydroxydecanoate) copolymer resin, poly(3-hydroxybutyrate-co-3-hydroxyundecanoate) copolymer resin, and poly(3-hydroxybutyrate-co-4-hydroxybutyrate) copolymer resin. In particular, from the viewpoint of the processability, and physical properties of the molded article, the following are preferably usable: poly(3-hydroxybutyrate) homopolymer resin, poly(3-hydroxybutyrate-co-3-hydroxyvalerate) copolymer resin, poly(3-hydroxybutyrate-co-3-hydroxyvalerate-co-3-hydroxyhexanoate) copolymer resin, poly(3-hydroxybutyrate-co-3-hydroxyhexanoate) copolymer resin, poly(3-hydroxybutyrate-co-4-hydroxybutyrate) copolymer resin.

In the constituent ratio of 3-hydroxybutyrate (hereinafter may be referred to as 3HB) to comonomer(s) copolymerized therewith (for example, 3-hydroxyvalerate (hereinafter may be referred to as 3HV), 3-hydroxyhexanoate (hereinafter may be referred to as 3HH), 4-hydroxybutyrate (hereinafter may be referred to as 4HB)), that is, the ratio between the monomers in the copolymer resin in the PHA, the ratio of 3-hydroxybutyrate to the comonomer(s) is preferably from 97/3 to 80/20 (% by mole/% by mole), more preferably from 95/5 to 85/15 (% by mole/% by mole) from the viewpoint of the processability, the quality of the molded article, and others. If the proportion of the comonomer(s) is less than 3% by mole, the polyester resin composition may not be easily molded since the molding temperature and the thermal decomposition temperature are close to each other. If the proportion of the comonomer(s) is more than 20% by mole, the PHA is slowly crystallized so that the PHA may be deteriorated in productivity. The comonomer(s) may be a comonomer, or two or more comonomers. Even when two or more comonomers are used as the comonomer(s), a preferred range of the ratio between the monomers (the ratio of 3-hydroxybutyrate/the comonomers) in the copolymer resin is the same as described above.

The ratio between the individual monomers in the copolymer resin of the PHA is measurable through gas chromatography as follows: To about 20 mg of dry PHA are added 2 mL of a mixed liquid of sulfuric acid and methanol (15/85 (ratio by weight)) and 2 mL of chloroform. The system is airtightly stopped, heated at 100°C for 140 minutes to obtain methyl esters of a decomposition product of the PHA. After cooling, 1.5 g of sodium hydrogencarbonate is added thereto little by little to neutralize the mixture, and left to stand still until the generation of carbon dioxide stops. Thereto is added 4 mL of diisopropyl ether, and then the components are sufficiently mixed with each other. Thereafter, in the supernatant, the monomer unit composition of the PHA decomposition product is analyzed through capillary gas chromatography. In this way, the ratio between the individual monomers in the copolymer resin can be obtained.

A gas chromatograph used for the above is "GC-17A" manufactured by Shimadzu Corporation. A capillary column used therefor is "NEUTRA BOND-1" manufactured by GL Sciences Inc. (column length: 25 m, column internal diameter: 0.25 mm, and liquid film thickness: 0.4 µm). As a carrier gas, He is used. The pressure in an inlet of the column is set to 100 kPa, and the amount of an injected sample is 1 µL. Regarding temperature conditions, the sample temperature is raised from an initially starting temperature of 100°C to 200°C at a rate of 8°C/minute, and further raised from 200 to 290°C at a rate of 30°C/minute.

The weight average molecular weight (hereinafter may be referred to as Mw) of the PHA in the present invention is preferably from 200000 to 2500000, more preferably from 250000 to 2000000, even more preferably from 300000 to 1000000. If the weight average molecular weight is less than 200000, the mechanical properties and others may be poor. If the weight average molecular weight is more than 2500000, the resin composition may not be easily molded.

For a method for measuring the above-described weight average molecular weight, a gel permeation chromatography ("Shodex GPC-101" manufactured by Showa Denko K.K.) is used. In its column, a polystyrene gel ("Shodex K-804" manufactured by Showa Denko K.K.) is used. Chloroform is used for its mobile phase. The molecular weight can be obtained as a molecular weight in terms of polystyrene. A calibration curve at this time is prepared, using polystyrene species having weight average molecular weights of 31400, 197000, 668000 and 1920000, respectively.

The PHA is produced by Alcaligenes eutrophus AC32 strains into which a PHA synthase gene originating from Aeromonas caviae is introduced (International Depositary based on Budapest Treaty (international depositary authority: the Patent Microorganisms Depositary of the National Institute of Advanced Industrial Science and Technology (Central 6, 1-1-1 Higashi, Tsukuba City, Ibaraki Prefecture, Japan), Original Depositing date: August 12, 1996, Transferred on August 7, 1997, Deposition No.: FERM BP-6038 (transferred from original deposition: FERM P-15786)) (J. Bacteriol., 179, 4821(1997)), or some other microorganism.

The polyhydroxyalkanoate (A) used in the present invention is one or more selected from PHAs produced from microorganisms.

The acrylic compound (B) used in the present invention is an acrylic (co)polymer made mainly from one or more acrylic esters or methacrylic esters. The following may be excluded from examples of the acrylic compound (B): any composite rubber made of a polyorganosiloxane component and a polyalkyl (meth)acrylate component, and any polymer obtained by graft-polymerizing a vinyl monomer with at least one rubber selected from the group consisting of acrylic rubbers.

Regarding the acrylic ester(s) and the methacrylic ester(s), a single ester thereof may be used, or two or more esters thereof may be used together.

Specific examples of the acrylic ester constituting the acrylic compound (B) used in the present invention include acrylic acid, methyl acrylate, ethyl acrylate, propyl acrylate, isopropyl acrylate, n-butyl acrylate, isobutyl acrylate, 2-ethylhexyl acrylate, s-butyl acrylate, t-butyl acrylate, neopentyl acrylate, isodecyl acrylate, lauryl acrylate, tridecyl acrylate, stearyl acrylate, benzyl acrylate, tetrahydrofurfuryl acrylate, methoxyethyl acrylate, dimethylaminoethyl acrylate, chloroethyl acrylate, trifluoroethyl acrylate, heptadecafluorooctylethyl acrylate, isobornyl acrylate, adamanthyl acrylate, and tricyclodecenyl acrylate.

Specific examples of the methacrylic ester constituting the acrylic compound (B) used in the present invention include methacrylic acid, methyl methacrylate, ethyl methacrylate, n-butyl methacrylate, isobutyl methacrylate, 2-ethylhexyl methacrylate, propyl methacrylate, isopropyl methacrylate, isobutyl methacrylate, s-butyl methacrylate, t-butyl methacrylate, neopentyl methacrylate, ethylhexyl methacrylate, isodecyl methacrylate, lauryl methacrylate, tridecyl methacrylate, stearyl methacrylate, benzyl methacrylate, tetrahydrofurfuryl methacrylate, methoxyethyl methacrylate, dimethylaminoethyl methacrylate, chloroethyl methacrylate, trifluoroethyl methacrylate, heptadecafluorooctylethyl methacrylate, isobornyl methacrylate, adamanthyl methacrylate, and tricyclodecenyl methacrylate.

The acrylic compound (B) is preferably a copolymer made mainly from an acrylic ester and a methacrylic ester, more preferably a copolymer made mainly from butyl acrylate and methyl methacrylate since the obtained composition is excellent in blooming-inhibiting effect, and handlability when processed.

In the specification, the wording "mainly" means that in the acrylic compound, the acrylic ester and/or the methacrylic ester is/are contained in a proportion of 50% by weight or more.

The proportion of the acrylic ester and/or the methacrylic ester is preferably 50% by mass or more, more preferably 60% by mass or more, even more preferably 70% by mass or more.

The acrylic compound (B) in the present invention may be a copolymer obtained by copolymerizing a polyfunctional monomer having in the molecule thereof two or more polymerizable unsaturated bonds or a different copolymerizable monomer with the acrylic ester or methacrylic ester, as required.

Examples of the copolymer, which is obtained by copolymerizing the polyfunctional monomer having in the molecule thereof two or more polymerizable unsaturated bonds or the different copolymerizable monomer, include diallyl phthalate, triallyl cyanurate, triallyl isocyanurate, allyl methacrylate, allyl acrylate, ethylene glycol dimethacrylate, diethylene glycol dimethacrylate, triethylene glycol dimethacrylate, propylene glycol dimethacrylate, 1,3-butylene glycol dimethacrylate, 1,4-butylene glycol dimethacrylate, and divinylbenzene.

However, the acrylic compound (B) in the present invention is preferably a polymer which contains, as a main component, a monofunctional monomer having in the molecule thereof one polymerizable unsaturated bond, such as an acrylic ester or methacrylic ester, and which is a thermoplastic linear polymer that does not substantially have any crosslinked structure.

The wording "a polymer that does not substantially have any crosslinked structure" has a meaning that the polymer has thermoplasticity even when the polymer partially has a crosslinked structure. For example, the crosslinkage degree thereof can be represented by the fraction of gel therein. The gel fraction in the acrylic compound used in the present invention is less than 20%.

It can be judged by a general measuring method whether or not any polymer has thermoplasticity. For example, this matter can be judged from a flow curve chart that is obtained by a constant temperature elevation measurement method using a Koka type flow tester.

The gel fraction, which is an index of the crosslinkage degree, is represented by the proportion by weight of a portion that is not dissolved in a good solvent such as chloroform.

The method for polymerizing the acrylic compound (B) in the present invention is not particularly limited, and is, for example, a method of polymerizing the acrylic compound (B) by an ordinary emulsion polymerization method using a radical polymerization initiator and an optional chain transfer agent (for example, a method described in JP S50-88169 or JP S61-141746).

The upper limit of the weight average molecular weight of the acrylic compound (B) used in the present invention is preferably 10000000, more preferably 9000000 from the viewpoint of blooming-inhibition. If the weight average molecular weight is more than 10000000, the acrylic compound (B) is deteriorated in dispersibility, so that the blooming-inhibiting effect may become insufficient. The lower limit of the weight average molecular weight of the acrylic compound (B) is not particularly limited. From the viewpoint of the availability, the lower limit is 50000, preferably 100000. The weight average molecular weight of the acrylic compound (B) is a weight average molecular weight in terms of polystyrene that is obtained by gel permeation chromatography (GPC), for example, the above-described method for measuring the weight average molecular weight of a (3-hydroxyalkanoate) copolymer.
In the present invention, a single species of the acrylic compound (B) may be used, and two or more species of the acrylic compound (B) may be used in combination.

The use amount of the acrylic compound (B) in the present invention is from 0.1 to 100 parts by weight, preferably from 0.1 to 50 parts by weight, more preferably from 0.3 to 30 parts by weight, even more preferably from 0.5 to 20 parts by weight for 100 parts by weight of the polyhydroxyalkanoate (A). If the use amount of the acrylic compound (B) is less than 0.1 parts by weight, the blooming-inhibiting effect tends to be insufficient. If the use amount is more than 100 parts by weight, the external appearance and physical properties of the molded article tend to be damaged.

The pentaerythritol (C) is used as a crystallization nucleating agent for the polyhydroxyalkanoate (A) in the polyester resin composition of the present invention. Pentaerythritol is a compound represented by the following formula (2):

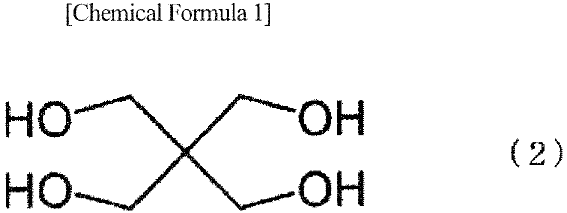

The pentaerythritol is a kind of polyhydric alcohol, and is an organic compound having a melting point of 260.5°C and a white crystal form. Although pentaerythritol is classified into a sugar alcohol, pentaerythritol does not originate from any natural product. Pentaerythritol can be synthesized by condensing acetaldehyde and formaldehyde with each other in a basic condition.

A product of pentaerythritol to be used in the present invention is not particularly limited as far as the product is ordinarily available. The product may be a reagent product or an industrial product. Examples of the reagent product include products manufactured by Wako Pure Chemical Industries, Ltd., Sigma-Aldrich Corporation, Tokyo Chemical Industry Co., Ltd., and Merck, respectively. Examples of the industrial product include products manufactured by Koei Chemical Co., Ltd. (trade name: PENTARIT) and Toyo Chemicals Co., Ltd., respectively. However, the reagent or industrial product is not limited to these examples.

Ordinarily available reagent products or industrial product may contain, as impurities, oligomers produced by dehydration-condensing pentaerythritol, such as dipentaerythritol and tripentaerythritol. These oligomers do not have any effect for the crystallization of the polyhydroxyalkanoate. However, the oligomers do not hinder the crystallization effect of pentaerythritol. Accordingly, the pentaerythritol used in the present invention may contain the oligomers.

The amount of the pentaerythritol used in the present invention is not particularly limited as far as the amount makes it possible to accelerate the crystallization of the polyhydroxyalkanoate (A). However, in order that the polyester resin composition can gain an effect of the pentaerythritol as a crystallization nucleating agent, the lower limit value of the content of the pentaerythritol is preferably 0.05 parts by weight, more preferably 0.1 parts by weight, even more preferably 0.5 parts by weight for 100 parts by weight of the total content of the polyhydroxyalkanoate (A) and the acrylic compound (B). If the amount of the pentaerythritol (C) is too large, the composition is lowered in viscosity when melted, so that the composition may not be easily processed. Thus, the upper limit value of the content of the pentaerythritol (C) is preferably 20 parts by weight, more preferably 10 parts by weight, even more preferably 8 parts by weight for 100 parts by weight of the total content of the polyhydroxyalkanoate (A) and the acrylic compound (B).

The blend ratio by weight between the acrylic compound (B) and the pentaerythritol (C) is as follows: the ratio of the acrylic compound (B) to the pentaerythritol (C) is preferably 2 to 10 : 1. If the ratio of the acrylic compound (B) to the pentaerythritol (C) is less than 2 : 1, the blooming-inhibiting effect tends to be insufficient. If the ratio of the acrylic compound (B) to the pentaerythritol (C) is more than 10 : 1, the blooming-inhibiting effect tends not to be made greater.

The polyester resin composition of the present invention is more excellent than a polyhydroxyalkanoate alone, or a resin composition including a polyhydroxyalkanoate and a sugar alcohol compound other than pentaerythritol, the crystallization of the composition proceeds stably under wide processing conditions. Thus, the composition has the following advantages.

In poly(3-hydroxybutyrate-co-3-hydroxyhexanoate) (hereinafter may be referred to as P(3HB-co-3HH)), poly(3-hydroxybutyrate-co-3-hydroxyvalerate (P(3HB-co-3HV)) and others out of polyester resins, the proceed of the crystallization is affected by the resin temperature at the melting time when these resins are each cooled to be crystallized after heated and melted. In other words, as the resin temperature is higher at the melting time, it tends to become more difficult that the crystallization proceeds. For example, in P(3HB-co-3HH), the following tendency is produced: when the resin temperature at the melting time is in a range from the melting point of the resin to about 170°C, it becomes more difficult that the crystallization of the resin proceeds at the cooling time as the resin temperature is higher at the melting time. Moreover, when the resin temperature at the melting time is about 180°C or higher, the crystallization at the cooling time tends to proceed over several hours. Accordingly, for better processing, it is required to control the resin temperature at the melting time to a temperature range of about 170 to 180°C. However, in ordinary molding, a resin does not have a uniform temperature while melted; it is therefore very difficult that the resin is controlled to this temperature range.

The crystallization of the polyester resin composition of the present invention proceeds stably in a wide temperature range when the resin is melted. In other words, even when the resin temperature at the melting time is in a temperature range from the melting point of the resin or higher to about 190°C, the crystallization proceeds stably and quickly so that the resin composition of the present invention has excellent processing properties for wide processing conditions. It is not preferred from the viewpoint of thermal deterioration to melt-work the resin composition at such a temperature that the resin temperature at the melting time is 200°C or higher.

The proceed of the crystallization of polyhydroxyalkanoates also depends on the cooling temperature thereof. For example, P(3HB-co-3HH) has a tendency that the crystallization thereof proceeds most speedily when the cooling temperature after the heating and melting is from 50 to 70°C. When the cooling temperature is lower than 50°C, or is higher than 70°C, the crystallization tends not to proceed easily. In general molding, the cooling temperature correlates the mold temperature. Thus, it is required to control the mold temperature into the above-described temperature range, that is, the range of 50 to 70°C. However, in order to control the mold temperature into a uniform value, it is necessary to design the structure or shape of the mold minutely. The design is very difficult.

The crystallization of the polyester resin composition of the present invention proceeds stably in a wide cooling temperature range of the resin after the composition is melted. In other words, even when the cooling temperature after the heating and melting is in a temperature range of 20 to 80°C, the crystallization proceeds stably and speedily; accordingly, the resin composition of the present invention has excellent processing properties for wide processing conditions.

The polyester resin composition of the present invention has advantages as described above, which cannot be gained by any conventional polyhydroxyalkanoate resin, or resin composition including a polyhydroxyalkanoate resin and a sugar alcohol compound other than pentaerythritol. Thus, the composition of the present invention has excellent processing properties since the resin temperature when the composition is melted, and the temperature at which the mold or the like is cooled can each be set to a wide range.

The polyester resin composition of the present invention expresses properties as described below since the crystallization thereof proceeds stably and speedily.

For example, when P(3HB-co-3HH) is molded, the crystallization thereof does not proceed sufficiently. Even after the molding, the crystallization proceeds gradually so that spherocrystals grow. Thus, the obtained molded article tends to change with time in mechanical properties to become brittle gradually. However, immediately after the polyester resin composition of the present invention is molded, many micro crystals are produced. Thus, after the molding, spherocrystals do not grow easily, and the molded article is also inhibited from becoming brittle. Consequently, the present invention is excellent in article quality stability.

A gap is present between joining portions (for example, parting line portions, inserting portions or slide-core sliding portions) of a cavity in a shaping-mold for injection molding. When the resin is injection-molded, the resin melted is put into the gap to produce a "flash" and then the flash bonds to the molded article. Since polyhydroxyalkanoates are slow in crystallization to keep a long time when the resins have fluidity, the flash is easily generated to require a large labor for post-treating the molded article. However, the polyester resin composition of the present invention is rapidly crystallized so that flashes are not easily molded therein. Consequently, labors for post-treating the molded article can be decreased; thus, the composition is practically preferable.

The polyester resin composition according to the present invention can easily be produced through a known melt-kneading machine as far as the machine is capable of heating raw materials of the composition to the melting point or higher of the polyhydroxyalkanoate, and then kneading the raw materials. For example, the following methods are usable: a method of using, for example, an extruder, a roll mill or a Bunbury mixer to melt-knead the polyhydroxyalkanoate, the acrylic compound, pentaerythritol, and optional other components to be made into a pellet form, and then forming and molded articles; and a method of preparing a masterbatch containing pentaerythritol at a high concentration beforehand, melt-kneading this masterbatch with the polyhydroxyalkanoate and the acrylic compound at a desired ratio, and then forming and molding articles. Pentaerythritol, the acrylic compound and the polyhydroxyalkanoate may be added simultaneously into the kneading machine, or the polyhydroxyalkanoate and the acrylic compound may be melted beforehand and then pentaerythritol may be added thereto.

As far as the advantageous effects of the present invention are not hindered, the polyester resin composition of the present invention may contain various additives. Examples of the additives include a lubricant, a crystal nucleating agent other than pentaerythritol, a plasticizer, a hydrolysis inhibitor, an anti-oxidant, a releasing agent, an ultraviolet absorber, colorants such as a dye and a pigment, and an inorganic filler. One or more of the additives are usable in accordance with the purpose of the resin composition. These additives preferably have biodegradability.

Other examples of the additives include inorganic fibers such as carbon fiber, and organic fibers such as human hair and wool. The other additives may be natural fibers such as bamboo fiber, pulp fiber, kenaf fiber, and a natural fiber of any other similar plat-alternate species, an annual herb plant in Hibiscus genus, Malvaceae family or an annual herb plant in Tiliaceae family. From the viewpoint of carbon dioxide reduction, a plant-originating natural fiber is preferred, and kenaf fiber is particularly preferred.

The following will describe an example of a method for producing a molded article made of the polyester resin composition of the present invention.

First, an extruder, a kneader, a Bunbury mixer or a roll is used to melt-knead the polyhydroxyalkanoate (A), the acrylic compound (B), the pentaerythritol (C), and the various optional additives to produce a polyester resin composition. The composition is extruded into a strand form. The strand is cut to obtain pellets each made of the polyester resin composition in the form of particles having, for example, a circularly columnar, elliptically columnar, spherical, cubic or rectangular parallelepiped shape.

In this operation, the temperature for melt-kneading the polyhydroxyalkanoate (A), the acrylic compound (B) and the others depends on the melting point, the melt viscosity and other factors of the polyhydroxyalkanoate (A) to be used, the melt viscosity of the acrylic compound (B), and others. Thus, the temperature cannot be specified without reservation. However, the resin temperature of the melt-kneaded product at an outlet in the die is preferably from 140 to 200°C, preferably from 150 to 195°C, even more preferably from 160 to 190°C. If the resin temperature of the melt-kneaded product is lower than 140°C, the acrylic compound (B) may be insufficiently dispersed. If the temperature is higher than 200°C, the polyhydroxyalkanoate (A) may be thermally decomposed.

The pellets produced by this method are sufficiently dried at 40 to 80°C to remove water, and then molded by a known molded method to obtain any molded article Examples of the forming method include film forming, sheet forming, injection molding, blow molding, fiber spinning, extrusion foaming, and bead foaming.

Examples of the method for producing a film formed article and a sheet forming include T-die extrusion, calendaring, roll molding and film blowing. However, the film forming method is not limited to these examples. The forming temperature at the time of the film forming is preferably from 140 to 190°C. A film obtained from the polyester resin composition of the present invention can be subjected to thermal molding under heating, vacuum molding, or compression molding.

The method for producing an injection-molded article may be, for example, an injection molding method generally adopted to mold a thermoplastic resin, such as injection molding, gas assist molding, or injection compression molding. In accordance with the purpose, the following methods other than the above-described methods may be adopted: in-mold molding, gas pressing, two-color molding, sandwiching molding, and push-pull molding, and SCORIM. However, the injection molding method is not limited to these examples. At the time of the injection molding, the molding temperature is preferably from 140 to 190°C, and the mold temperature is preferably from 20 to 80°C, more preferably from 30 to 70°C.

The molded article of the present invention is favorably usable in the fields of agriculture, fishery, forestry, gardening, medical science, hygiene products, food industry, clothes, non-clothes, packages, automobiles, building material, and others.

### Examples

Hereinafter, the present invention will be specifically described by way of processing examples. However, the technical scope of the invention is not limited by these examples.

Polyhydroxyalkanoate (A1): the compound produced in Production Example was used.

<Production Example> For culturing and production, a KNK-005 strain (see USP No. 7384766) was used.

The composition of a mother culture medium was as follows: 1 w/v% Meat-extract, 1 w/v% Bacto-Tryptone, 0.2 w/v% Yeast-extract, 0.9 w/v% Na₂HPO₄·12H₂O and 0.15 w/v% KH₂PO₄ (pH: 6.8).

The composition of a preculture medium was as follows: 1.1 w/v% Na₂HPO₄· 12H₂O, 0.19 w/v% KH₂PO₄, 1.29 w/v% (NH₄)₂SO₄, 0.1 w/v% MgSO₄·7H₂O, a 0.5 v/v% trace mineral salt solution (1.6 w/v% FeCl₃·6H₂O, 1 w/v% CaCl₂·2H₂O, 0.02 w/v% CoCl₂·6H₂O, 0.016 w/v% CuSO₄·5H₂O and 0.012 w/v% NiCl₂·6H₂O were dissolved in 0.1 N hydrochloric acid). As a carbon source, palm oil was added batchwise at a concentration of 10 g/L.

The composition of a production medium of PHA was as follows: 0.385 w/v% Na₂HPO₄·12H₂O, 0.067 w/v% KH₂PO₄, 0.291 w/v% (NH₄)₂SO₄, 0.1 w/v% MgSO₄·7H₂O and a 0.5 v/v% trace mineral salt solution (1.6 w/v% FeCl₃·6H₂O, 1 w/v% CaCl₂·2H₂O, 0.02 w/v% CoCl₂·6H₂O, 0.016 w/v% CuSO₄·5H₂O and 0.012 w/v% NiCl₂·6H₂O were dissolved in 0.1 N hydrochloric acid), and 0.05 w/v% BIOSPUREX 200K (antifoaming agent manufactured by Cognis Japan Ltd.).

First, a glycerol stock (50 µL) of the KNK-005 strain was inoculated into the mother culture medium (10 mL), and cultured for 24 hours to perform mother culture. Next, the mother culture liquid was inoculated at 1.0 v/v% into a 3-L jar fermenter (MDL-300 model, manufactured by B. E. Marubishi Co., Ltd.) in which 1.8 L of the preculture medium was put. The operating conditions involved a culture temperature of 33°C, a stirring rate of 500 rpm, and an aeration rate of 1.8 L/min. While the pH was controlled to the range of 6.7 to 6.8, the preculture was performed by culturing for 28 hours. For the pH control, a 14% aqueous ammonium hydroxide solution was used.

Next, the preculture liquid was inoculated at 1.0 v/v% into a 10-Ljar fermenter (MDS-1000 model, manufactured by B. E. Marubishi Co., Ltd.) in which 6 L of the production medium was put. The operating conditions involved a culture temperature of 28°C, a stirring rate of 400 rpm, and an aeration rate of 6.0L/min, with the pH controlled to range of 6.7 to 6.8. For the pH control, a 14% aqueous ammonium hydroxide solution was used. As a carbon source, palm oil was used. The culture was performed for 64 hours, and after completing the culture, the bacterial cells were recovered by centrifugal separation, washed with methanol, freeze-dried and then the weight of dry bacterial cells was measured.

To 1 g of the obtained dried bacterial cells was added 100 mL of chloroform, and it was stirred at room temperature overnight to extract PHA in the bacterial cells. The residue of the bacterial cells was filtered off, and then the extract was concentrated to give the total volume of 30 ml with an evaporator. Thereto was gradually added 90 mL of hexane. It was then allowed to stand still for 1 hour while slowly stirred. The precipitated PHA was filtered off, and then vacuum-dried at 50°C for 3 hours to obtain PHA. The 3HH composition analysis of the obtained PHA was made through gas chromatography as follows: To 20 mg of the dried PHA were added 2 mL of a mixed liquid of sulfuric acid and methanol (15/85) and 2 mL of chloroform. The system was airtightly stopped, and heated at 100°C for 140 minutes to obtain a methyl ester of a decomposition product of the PHA. After cooling, 1.5 g of sodium hydrogencarbonate was added thereto little by little to neutralize the mixture, and left to stand still until the generation of carbon dioxide gas stopped. Thereto was added 4 mL of diisopropyl ether, and the components were sufficiently mixed with each other and then centrifuged. The monomer unit composition of the polyester decomposition product in the supernatant was analyzed through capillary gas chromatography. A gas chromatograph used for the above was GC-17A manufactured by Shimadzu Corporation. A capillary column used therefor was NEUTRA BOND-1 manufactured by GL Sciences Inc. (column length: 25 m, column internal diameter: 0.25 mm, and liquid film thickness: 0.4 µm). As a carrier gas, He was used. The pressure in an inlet of the column was set to 100 kPa, and the amount of an injected sample was 1 µL. Regarding temperature conditions, the sample temperature was raised from an initially starting temperature of 100°C to 200°C at a rate of 8°C/minute, and further raised from 200 to 290°C at a rate of 30°C/minute. As a result of the analysis under these conditions, the obtained compound was PHA as represented by the formula (1), poly(3-hydroxybutyrate-co-3-hydroxyhexanoate) (P(3HB-co-3HH)). The 3-hydroxyhexanoate (3HH) composition was 5.6% by mole.

After the culturing, PHBH was obtained from the culture liquid by a method described in WO 2010/067543. The weight average molecular weight Mw thereof was 600000, which was measured by GPC.

Polyhydroxyalkanoate material A2: P3HB4HB (trade name: EM 5400A) was used, which was manufactured by Shenzhen Ecomann Biotechnologies Co., Ltd.

Acrylic compound material B1: an acrylic modifier (trade name: KANE ACE PA40, a copolymer made from methyl methacrylate and butyl acrylate; Mw = 4000000) manufactured by Kaneka Corporation was used.

Acrylic compound material B2: an acrylic modifier (trade name: KANE ACE PA60, a copolymer made from methyl methacrylate and butyl acrylate; Mw = 5000000) manufactured by Kaneka Corporation was used.

Pentaerythritol material C1: pentaerythritol manufactured by Wako Pure Chemical Industries, Ltd. was used.

### <Examples 1 to 11> and <Comparative Examples 1 to 4>

### (Production of Polyester Resin Compositions)

In each of these examples, a co-rotating intermeshing twin screw extruder (TEX 30 manufactured by the Japan Steel Works, Ltd.) was used to melt-knead a polyhydroxyalkanoate, an acrylic compound, and pentaerythritol (manufactured by Wako Pure Chemical Industries, Ltd.) to have a blend ratio shown in Table 1 (the blend ratio in the table was according to respective parts by weight) at a set temperature of 120 to 160°C and a screw rotating speed of 100 rpm to obtain a polyester resin composition. The resin temperature was obtained by measuring the melted resin extruded out from the die directly with a K-type thermocouple. The polyester resin composition was pulled out into a strand form through the die. The strand was cut into a pellet form.

### (Release time Required for Releasing Molded article Obtained by Injection Molding)

An injection molding machine (FN 1000, manufactured by Nissei Plastic Industrial Co., Ltd.) was used to mold the obtained resin composition into a test specimen in the form of a flat plate of 150 mm x 150 mm size and 2 mm thickness under conditions that the set temperature of a cylinder of the molding machine was from 130 to 160°C and the set temperature of the mold was 35°C. Regarding the actual temperature of the resin at the time of the molding (the resin temperature at the time of the injection) and the actual temperature of the mold (mold temperature), the injected-out resin and the surface of the mold were measured, respectively, with the K-type thermocouple in a contact manner.

The melted resin was injected into the mold giving the above-described shape, and then parts of the mold were opened from each other. The test specimen was then ejected out without being deformed with an ejection pin. The time required until the release of the specimen from the mold had been finished was defined as the release time. It indicates that as the release time is shorter, the resin composition is more rapidly crystallized so that the composition is better in processability to be improved. The results are shown in Table 1.

### (Blooming evaluation)

The obtained flat-plate molded article was allowed to stand still at 23°C and a relative humidity of 50%. The surface of the molded article was visually observed when 7 days elapsed after the composition was molded, and when 60 days elapsed thereafter. If the blooming was occurred, the surface thereof turned whitish. When the blooming was not caused, the specimen was judged to be good (circular mark). When the blooming was caused, the specimen was judged to be bad (cross mark). The results are shown in Table 1.

**[Table 1]**

| | | | Examples | | | | | | | | | | | Comparative Examples | | | |
|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 | 4 |
| Raw materials | Polyhydroxyalkanoate | Material A1 | 99 | 95 | 90 | 80 | 95 | 90 | 80 | | | | | 100 | | 100 | |
| | Polyhydroxyalkanoate | Material A2 | | | | | | | | 95 | 90 | 80 | 90 | | 100 | | 100 |
| | Acrylic compound | Material B 1 | 1 | 5 | 10 | 20 | | | | 5 | 10 | 20 | | | | | |
| | Acrylic compound | Material B2 | | | | | 5 | 10 | 20 | | | | 10 | | | | |
| | Pentaerythritol | Material C1 | 0.5 | 1 | 2 | 3 | 1 | 2 | 3 | 1 | 2 | 3 | 2 | 1 | 1 | 0 | 0 |
| Melt-kneading | Resin temperature | °C | 166 | 168 | 170 | 175 | 166 | 171 | 176 | 172 | 176 | 175 | 170 | 165 | 164 | 165 | 165 |
| Injection molding | Mold temperature | °C | 35 | 36 | 36 | 36 | 36 | 36 | 36 | 34 | 35 | 35 | 36 | 35 | 35 | 35 | 35 |
| | Resin temperature at the injection time | °C | 179 | 180 | 181 | 182 | 180 | 181 | 182 | 179 | 180 | 182 | 180 | 178 | 178 | 177 | 177 |
| | Release time | seconds | 28 | 30 | 30 | 32 | 31 | 32 | 33 | 30 | 31 | 33 | 31 | 28 | 29 | 58 | 95 |
| Blooming | After 7 days elapsed from the molding | Visually observed | ○ | ○ | ○ | ○ | ○ | ○ | ○ | ○ | ○ | ○ | ○ | ○ | ○ | Not evaluated | Not evaluated |
| | After 90 days elapsed from the molding | Visually observed | ○ | ○ | ○ | ○ | ○ | ○ | ○ | ○ | ○ | ○ | ○ | × | × | Not evaluated | Not evaluated |

As is understood from Table 1, any one of the compositions into which pentaerythritol was blended was made shorter in release time since pentaerythritol promoted the crystallization of the composition. It has been understood that when any one of the compositions into which no acrylic compound was blended was allowed to stand still over long time, a small quantity of blooming was recognized in the surface of molded article, and in contrast the blend of the acrylic compound inhibited the blooming without damaging the release time.

## Claims

1. A polyester resin composition comprising a polyhydroxyalkanoate (A), an acrylic compound (B) and pentaerythritol (C);
wherein the acrylic compound (B) is an acrylic (co)polymer made mainly from one or more acrylic esters or methacrylic esters, wherein the term "mainly" specifies that the acrylic ester and/or the methacrylic ester is/are contained in a proportion of 50% by weight or more in the acrylic compound (B), and
wherein the acrylic compound (B) is contained in an amount of from 0.1 to 100 parts by weight based on 100 parts by weight of the polyhydroxyalkanoate (A).

2. The polyester resin composition according to claim 1, wherein the acrylic compound (B) is a copolymer made mainly from an acrylic ester and a methacrylic ester.

3. The polyester resin composition according to claim 1 or 2, wherein the acrylic compound (B) is a copolymer made mainly from butyl acrylate and methyl methacrylate.

4. The polyester resin composition according to any one of claims 1 to 3, wherein an amount of the acrylic compound (B) is from 0.1 to 50 parts by weight for 100 parts by weight of the polyhydroxyalkanoate (A).

5. The polyester resin composition according to any one of claims 1 to 4, wherein a content of the pentaerythritol (C) is from 0.05 to 20 parts by weight for 100 parts by weight of a total content of the polyhydroxyalkanoate (A) and the acrylic compound (B).

6. The polyester resin composition according to any one of claims 1 to 5, wherein the polyhydroxyalkanoate (A) contains a repeating unit represented by general formula (1) below:
[-CHR-CH₂-CO-O-] (1)
wherein R represents an alkyl group represented by CₙH₂ₙ₊₁ wherein n is an integer of 1 or more and 15 or less.

7. The polyester resin composition according to any one of claims 1 to 6, wherein the polyhydroxyalkanoate (A) contains one or more selected from poly(3-hydroxybutyrate), poly(3 -hydroxybutyrate-co-3 -hydroxyvalerate), poly(3 -hydroxybutyrate-co-3 - hydroxyvalerate-co-3-hydroxyhexanoate), poly(3-hydroxybutyrate-co-3-hydroxyhexanoate), and poly(3-hydroxybutyrate-co-4-hydroxybutyrate).

8. A polyester resin molded article obtained by molding the polyester resin composition according to any one of claims 1 to 7.

## Patentansprüche

1. Eine Polyesterharzzusammensetzung, umfassend ein Polyhydroxyalkanoat (A), eine Acrylverbindung (B) und Pentaerythrit (C);
wobei die Acrylverbindung (B) ein Acryl(co)polymer ist, das hauptsächlich aus einem oder mehreren Acrylestern oder Methacrylestern hergestellt ist, wobei der Begriff "hauptsächlich" festlegt, dass der Acrylester und/oder der Methacrylester zu einem Anteil von 50 Gew.-% oder mehr in der Acrylverbindung (B) enthalten ist/sind, und wobei die Acrylverbindung (B) in einer Menge von 0,1 bis 100 Gewichtsteilen, bezogen auf 100 Gewichtsteile des Polyhydroxyalkanoats (A), enthalten ist.

2. Die Polyesterharzzusammensetzung gemäß Anspruch 1, wobei die Acrylverbindung (B) ein Copolymer ist, das hauptsächlich aus einem Acrylester und einem Methacrylester hergestellt ist.

3. Die Polyesterharzzusammensetzung nach Anspruch 1 oder 2, wobei die Acrylverbindung (B) ein Copolymer ist, das hauptsächlich aus Butylacrylat und Methylmethacrylat hergestellt ist.

4. Die Polyesterharzzusammensetzung nach einem der Ansprüche 1 bis 3, wobei eine Menge der Acrylverbindung (B) 0,1 bis 50 Gewichtsteile auf 100 Gewichtsteile des Polyhydroxyalkanoats (A) beträgt.

5. Die Polyesterharzzusammensetzung nach einem der Ansprüche 1 bis 4, wobei ein Gehalt des Pentaerythrits (C) 0,05 bis 20 Gewichtsteile auf 100 Gewichtsteile eines Gesamtgehalts des Polyhydroxyalkanoats (A) und der Acrylverbindung (B) beträgt.

6. Die Polyesterharzzusammensetzung gemäß einem der Ansprüche 1 bis 5, wobei das Polyhydroxyalkanoat (A) eine Wiederholungseinheit enthält, dargestellt durch die folgende allgemeine Formel (1):
[-CHR-CH₂-CO-O-] (1)
wobei R eine Alkylgruppe darstellt, die dargestellt ist durch CₙH₂ₙ₊₁, wobei n eine ganze Zahl von 1 oder mehr und 15 oder weniger ist.

7. Die Polyesterharzzusammensetzung gemäß einem der Ansprüche 1 bis 6, wobei das Polyhydroxyalkanoat (A) eines oder mehrere, ausgewählt aus Poly(3-hydroxybutyrat), Poly(3 -hydroxybutyrat-co-3 -hydroxyvalerat), Poly(3 -hydroxybutyrat-co-3 - hydroxyvalerat-co-3-hydroxyhexanoat), Poly(3-hydroxybutyrat-co-3-hydroxyhexanoat) und Poly(3-hydroxybutyrat-co-4-hydroxybutyrat), enthält.

8. Ein Formkörper aus Polyesterharz, erhalten durch Formen der Polyesterharzzusammensetzung gemäß einem der Ansprüche 1 bis 7.

## Revendications

1. Composition de résine de polyester comprenant un polyhydroxyalcanoate (A), un composé acrylique (B) et du pentaérythritol (C) ;
où le composé acrylique (B) est un (co)polymère acrylique produit principalement à partir d'un ou plusieurs esters acryliques ou esters méthacryliques, où le terme "principalement" spécifie que l'ester acrylique et/ou l'ester méthacrylique est/sont contenus en une proportion de 50 % en poids ou plus dans le composé acrylique (B), et
où le composé acrylique (B) est contenu en une quantité de 0,1 à 100 parties en poids sur la base de 100 parties en poids du polyhydroxyalcanoate (A).

2. Compsition de résine de polyester selon la revendication 1, où le composé acrylique (B) est un copolymère produit principalement à partir d'un ester acrylique et d'un ester méthacrylique.

3. Composition de résine de polyester selon la revendication 1 ou 2, où le composé acrylique (B) est un copolymère produit principalement à partir d'acrylate de butyle et de méthacrylate de méthyle.

4. Composition de résine de polyester selon l'une quelconque des revendications 1 à 3, où une quantité du composé acrylique (B) est de 0,1 à 50 parties en poids pour 100 parties en poids du polyhydroxyalcanoate (A).

5. Composition de résine de polyester selon l'une quelconque des revendications 1 à 4, où une teneur du pentaérythritol (C) est de 0,05 à 20 parties en poids pour 100 parties en poids d'une teneur totale du polyhydroxyalcanoate (A) et du composé acrylique (B).

6. Composition de résine de polyester selon l'une quelconque des revendications 1 à 5, où le polyhydroxyalcanoate (A) contient une unité répétée représentée par la formule générale (1) ci-dessous :
[-CHR-CH₂-CO-O-] (1)
où R représente un groupe alkyle représenté par CₙH₂ₙ₊₁ où n est un entier de 1 ou plus et 15 ou moins.

7. Composition de résine de polyester selon l'une quelconque des revendications 1 à 6, où le polyhydroxyalcanoate (A) contient un ou plusieurs choisis parmi le poly(3-hydroxybutyrate), le poly(3-hydroxybutyrate-co-3-hydroxyvalérate), le poly(3-hydroxybutyrate-co-3-hydroxyvalérate-co-3-hydroxyhexanoate), le poly(3-hydroxybutyrate-co-3-hydroxyhexanoate) et le poly(3-hydroxybutyrate-co-4-hydroxybutyrate).

8. Article moulé en résine de polyester obtenu par moulage de la composition de résine de polyester selon l'une quelconque des revendications 1 à 7.
